# EUROPÄISCHE PATENTSCHRIFT

(11) **EP 1 325 590 B1**
(45) Veröffentlichungstag und Bekanntmachung des Hinweises auf die Patenterteilung: **06.07.2005**
(21) Anmeldenummer: 01274249.0
(22) Anmeldetag: 05.10.2001
(51) Int. Cl.: H04L 12/28, H04L 12/56, H04Q 7/38

(54) **VERFAHREN ZUR ÜBERTRAGUNG VON DATENPAKETEN ÜBER EINE LUFTSCHNITTSTELLE EINES MOBILFUNKSYSTEMS**
METHOD FOR THE TRANSMISSION OF DATA PACKETS VIA A RADIO INTERFACE OF A MOBILE RADIO SYSTEM
PROCEDE DE TRANSMISSION DE PAQUETS DE DONNEES PAR UNE INTERFACE AIR D'UN SYSTEME DE TELEPHONIE MOBILE

(30) Priorität: 09.10.2000 DE 10049797
(43) Veröffentlichungstag der Anmeldung: 09.07.2003
(73) Patentinhaber: SIEMENS AKTIENGESELLSCHAFT, 80333 München (DE)
(72) Erfinder: HANS, Martin, 31139 Hildesheim (DE); BECKMANN, Mark, 38102 Braunschweig (DE); ECKERT, Michael, 38122 Braunschweig (DE); OTTE, Andreas, 29227 Celle (DE); HALLMANN, Udo, 31246 Lahstedt (DE)
(86) Internationale Anmeldenummer: PCT/DE2001/003843
(87) Internationale Veröffentlichungsnummer: WO 2002/096030

(56) Entgegenhaltungen:
- WO-A-00/28760
- WO-A-99/52307
- "3rd Generation Partnership Project;Technical Specification Group Radio Access Network; Radio Interface Protocol Architecture (3G TS 25.301 version 3.3.0)" 3RD GENERATION PARTNERSHIP PROJECT;TECHNICAL SPECIFICATION GROUP RADIO ACCESS NETWORK; RADIO INTERFACE PROTOCOL ARCHITECTURE (3G TS 25.301 VERSION 3.3.0), XX, XX, Dezember 1999 (1999-12), XP002164238

## Beschreibung

### 1. Hintergrund

### 1.1. Allgemeines

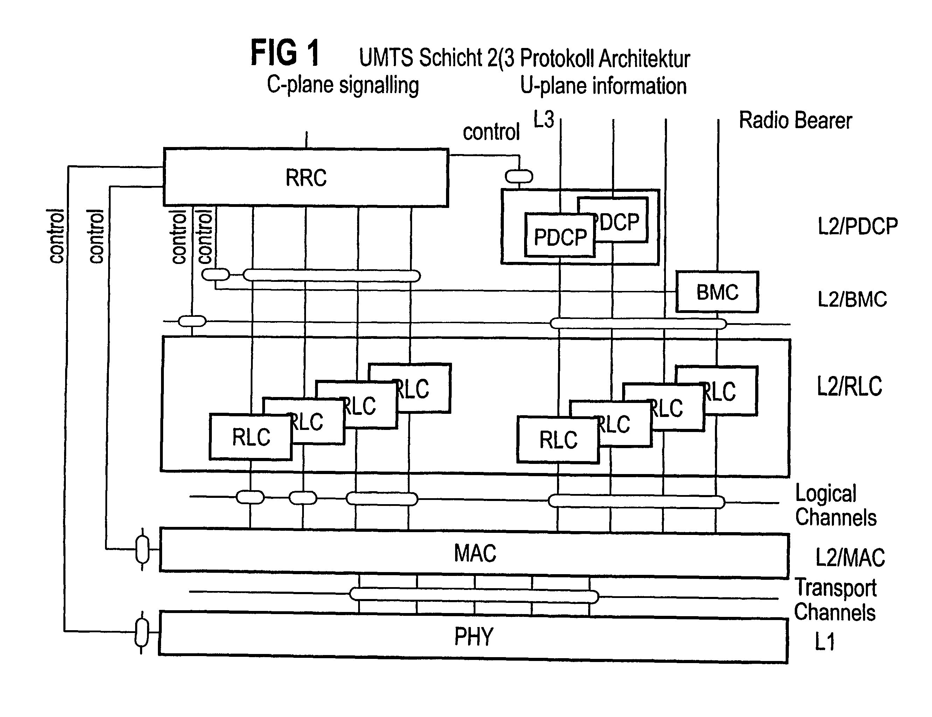

Die Figur 1 zeigt die UMTS Protokoll Architektur der Schicht 2 und der unteren Schicht 3 (zum Schichtenmodell siehe [1]), die die Protokolle der UMTS Luftschnittstelle enthalten. Diese Architektur liegt so sowohl im mobilen Endgerät (User Equipment, UE) als auch in einem Knoten des Mobilkommunikations-Netzes (Radio Network Controller, RNC) vor, das heißt jedes der Protokolle existiert einmal im UE und einmal im RNC.

Gleiche Protokolle tauschen Protokoll-Dateneinheiten (Protocol Data Units, PDUs) aus, indem sie die Dienste der unter ihnen liegenden Protokollschichten für den Transport der PDUs benutzen. Jede Protokollschicht bietet der uber ihr liegenden Schicht ihre Dienste an so genannten Dienstzugangspunkten an. Diese Dienstzugangspunkte werden zum besseren Verständnis der Architektur mit allgemein gebrauchlichen und eindeutigen Namen versehen (z.B. logische Kanäle, Transportkanäle, Radio Bearer). Für den Datentransfer nehmen Protokolle an ihren Dienstzugangspunkten Dienst-Dateneinheiten (Service Data Units, SDUs) auf und geben daraus erzeugte PDUs an die unter ihnen liegende Schicht ab, PDUs von oberen Schichten sind somit identisch mit den SDUs der darunter liegenden Schicht.

Die in Figur 1 dargestellten Protokoll-Schichten sind
- die Radio Resource Control- (RRC) Schicht
- die Packet Data Convergence Protokoll- (PDCP) Schicht
- die Broadcast/Multicast Control- (BMC) Schicht
- die Radio Link Control- (RLC) Schicht
- die Medium Access Control- (MAC) Schicht
- und die physikalische Schicht (PHY).

Da die PDCP- und BMC-Schichten im Zusammenhang mit der weiter unten erläuterten Erfindung keine besondere Bedeutung haben, werden sie hier nicht naher beschrieben. Im Folgenden werden die Funktionen von RRC, RLC und MAC kurz allgemein erläutert. Darauf folgt eine genauere Beschreibung derjenigen Funktionen, die durch die Erfindung verbessert oder verändert werden sollen.

### 1.2 Funktionsweise der Protokolle

Im UMTS Mobilfunkendgerät (UE) können Daten von verschiedenen Applikationen erzeugt werden. Für Sprachverbindungen erzeugt beispielsweise ein Sprachcoder einen oder mehrere Sprach-Datenströme oder ein HTML-Browser erzeugt unregelmäßige Paket-Datenströme. Diese Daten werden zunächst eventuell von Protokollen höherer Schichten modifiziert und für den Datentransfer in verschiedenen Netzen vorbereitet (bspw. TCP [3] und IP [4]. Für den Transport uber die UMTS-Luftschnittstelle müssen diese Daten in den verschiedenen Protokollen der Schicht 2 (PDCP, RLC und MAC) optimiert werden. Der Dienstzugangspunkt, an dem nicht-UMTS-spezifische Protokolle den Übertragungsdienst der UMTS-Luftschnittstelle nutzen können, wird Radio Bearer (RB) genannt. RBs werden also oberhalb der Schicht 2, je nach genutzten Protokollen oberhalb von PDCP, BMC oder RLC angeboten und übertragen Daten transparent vom UE über die UMTS-Luftschnittstelle zum RNC und umgekehrt. Für diese Übertragung wird beim Aufbau eines solchen RBs eine bestimmte übertragungsdienstqualität (Quality of Service, QoS) festgelegt, die sich beispielsweise durch eine bestimmte garantierte Datenrate oder eine maximale Übertragungsverzogerung auszeichnet. RBs sind grundsätzlich bidirektional, ein RB kann also Daten in zwei Richtigen (im Uplink, UL und im Downlink, DL) übertragen.

Da die Datenströme eines solchen RBs entweder kontinuierlich oder in Paketen beliebiger Länge vorliegen, ist es Aufgabe des RLC-Protokolls den Datenstrom in Pakete zu teilen (oder zusammenzufügen), die eine für die Luftschnittstelle optimale Länge aufweisen. Es werden also RLC-SDUs in RLC-PDUs zerteilt oder es werden mehrere RLC-SDUs zu RLC-PDUs zusammengesetzt. Darüber hinaus speichert die RLC-Schicht die an einem RB anliegenden Daten solange in einem RLC-Buffer, bis sie von unter RLC liegenden Schichten über die Luftschnittstelle transportiert werden konnen. Die RLC-Schicht hat weitere Aufgaben (insbesondere die der Fehlerkorrektur), die hier jedoch nicht relevant sind [5]. Die RLC-Schicht übergibt die nach der Teilung (Zusammenfügung) entstandenen RLC-PDUs der MAC-Schicht zur weiteren Übertragung. Die RLC-Schicht ist dabei so modelliert, dass es eine eigenständige RLC-Entität (RLC-entity) pro Radio Bearer gibt.

Die Dienstzugangspunkte, an denen die MAC-Schicht ihre Dienste anbietet, werden logische Kanäle genannt. Es gibt pro Radio Bearer genau eine RLC-Entitat und pro Richtung (UL/DL) entweder einen oder zwei logische Kanäle. Logische Kanäle unterscheiden sich durch die Art der Daten, die auf ihnen übertragen werden. Man unterscheidet deshalb logische Kanäle, auf denen UE-spezifische Nutzdaten wie die oben genannten Sprach-Datenströme (Dedicated Traffic Channel, DTCH), UE-spezifische Kontrolldaten (Dedicated Control Channel, DCCH) oder allgemeine Kontrolldaten (Common Control Channel, CCCH) übertragen werden. Mehrere DTCHs können sich darüber hinaus durch den für den entsprechenden RB konfigurierten QoS unterscheiden.

Für die Übertragung der Daten über die Luftschnittstelle ist nicht in erster Linie relevant was übertragen wird, sondern wie die Daten übertragen werden. Deshalb stellt die physikalische Schicht, die die Kodierung der Daten, die Modulation, die Hochfrequenztechnik und die Antenne enthalt, der MAC-Schicht Dienstzugangspunkte zur Verfügung, die sich dadurch auszeichnen, wie die Daten übertragen werden: die so genannten Transportkanäle. Es findet auf den Transportkanälen keine Unterscheidung mehr zwischen Nutz- und Kontrolldaten statt, es werden beispielsweise UE-spezifische Kanäle (Dedicated Channel, DCH), Kanäle mit wahlfreiem Zugriff (Random Access Channel, RACH) oder gemeinsam von mehreren UEs genutzte Kanale (Uplink oder Downlink Shared Channel, USCH oder DSCH) unterschieden.

Die Aufgabe der MAC-Schicht im Sender ist es, die Daten, die an einem logischen Kanal oberhalb der MAC-Schicht anliegen, auf die Transportkanäle der physikalischen Schicht abzubilden, bzw. im Empfänger auf Transportkanälen empfangene Daten auf logische Kanäle zu verteilen. Jeder Transportkanal ist dazu mit einem Satz von festen Parametern für die Übertragung der Daten vorkonfiguriert. Aus einem weiteren Satz von variablen Parametern kann die MAC-Schicht die jeweils fur die aktuelle Übertragung günstigsten aussuchen und so die Datenübertragung dynamisch beeinflussen. Eine gültige Einstellung aller Parameter für einen Transportkanal wird dabei Transportformat (TF) genannt. Die Menge aller möglichen Einstellungen für einen Transportkanal heißt "Transport Format Set" (TFS). Nur die variablen (dynamischen) Parameter des TF variieren innerhalb eines TFS. Zu einem bestimmten Zeitpunkt ist für jeden Transportkanal nur ein Transportformat eingestellt. Die Menge der zu einem bestimmten Zeitpunkt für alle vorhandenen Transportkanäle eingestellten Transportformate heißt "Transport Format Combination" (TFC). Aus den für jeden Transportkanal gültigen Transportformaten ergibt sich eine große Vielzahl von möglichen Kombinationen für alle Transportkanäle und theoretisch konnte jede dieser Kombinationen eine TFC ergeben. Praktisch ist die Anzahl der tatsächlich erlaubten Kombinationen von Transportformaten aber eingeschrankt. Die Menge aller erlaubten TFCs wird Transport "Format Combination Set" (TFCS) genannt.

Für den Aufbau, den Abbau und die Umkonfiguration von Transportkanälen und RBs und die Aushandlung aller Parameter der Schicht 2 Protokolle ist das RRC-Protokoll verantwortlich. Dieses Protokoll ist ebenfalls im UE und im RNC vorhanden und es nutzt die Übertragungsdienste, die die RLC-Schicht zur Verfügung stellt, also die logischen Kanäle, um RRC-Nachrichten zu versenden. Mit den zwischen den RRC-Protokollen ausgehandelten Übertragungsparametern werden dann die verschiedenen Protokolle der Schicht 2 konfiguriert. Beispielsweise wird für jeden Transportkanal beim Aufbau oder der Umkonfiguration zwischen den RRC-Protokollen ein TFS ausgehandelt und es wird das für alle Transportkanale gültige TFCS übertragen. Beides wird dann in die MAC-Schicht konfiguriert, so dass MAC die Abbildung der logischen Kanäle auf die Transportkanale vornehmen kann.

Wie oben beschrieben besteht ein Transport Format aus statischen Parametern, die nicht durch die MAC-Schicht beeinflusst werden können, sondern nur durch RRC ausgehandelt werden, und dynamischen Parametern, von denen ein Satz von verschiedenen Einstellungen von RRC ausgehandelt wird und die von der MAC-Schicht beeinflusst werden können. Zu den statischen Parametern gehören:
- die Länge des Übertragungsintervalls (Transmission Time Interval, TTI), das ist das Zeitintervall, für das die physikalische Schicht Daten zusammenhängend verarbeitet. Dieses kann 10, 20, 40 oder 80 Millisekunden lang sein.
- das Kodierungsschema zum Fehlerschutz
- die Länge der Redundanzinformationen zum Fehlerschutz (CRC, Cyclic Redundancy Check)

Die dynamischen Parameter sind:
- RLC-Size. (Dieser Parameter gibt die RLC-PDU-Große an.) Da die MAC-Schicht weder MAC-PDUs generiert, noch die von RLC empfangenen RLC-PDUs segmentiert oder aneinanderhängt, korrespondiert eine MAC-PDU immer mit genau einer RLC-PDU. Abhängig davon, ob die MAC-Schicht einer RLC-PDU einen Kontrolldatenkopf (MAC-header) voranstellt oder nicht, ist eine MAC-PDU exakt so groß wie oder um die Länge des MACheaders großer als die RLC-PDU. Mit diesem Parameter wird also sowohl die Größe der MAC-PDU als auch die Größe der RLC-PDU eingestellt. Der auf dem Transportkanal an die physikalische Schicht übergebene Datenblock, die MAC-PDU, wird auch Transportblock genannt.
- Number of Transport Blocks. Dieser Parameter bestimmt die Anzahl der MAC-PDUs, die wahrend eines TTIs an die physikalische Schicht zur gleichzeitigen Verarbeitung und den Transfer uber die Luftschnittstelle übergeben werden dürfen.
- In einigen Fallen kann auch das TTI ein dynamischer Parameter sein.

Wie man erkennt, ergibt sich aus den Parametern TTI, RLC-Size und Number of Transport Blocks die augenblickliche Datenrate des Transportkanals, die von der MAC-Schicht dynamisch durch Auswahl der verschiedenen Transportformate, also durch Variation des TTI, der RLC-Size und der "Number of Transport Blocks" eingestellt werden kann.

Über die dynamische Auswahl einer TFC für jedes Übertragungsinterval hinaus hat die MAC-Schicht die Aufgabe, die auf den verschiedenen RBs ankommenden Daten unter Berücksichtigung des für die RB eingestellten QoS auf die Transportkanale zu verteilen. Dabei wird von der RRC-Schicht beispielsweise beim Aufbau und der Rekonfiguration von RBs die so genannte "RB Mapping Info" ausgehandelt, die angibt, welche logischen Kanäle auf welche Transportkanale abzubilden sind, wobei jedem Transportkanal mehrere logische Kanäle zugeordnet werden können.

Die sendende MAC-Schicht sucht sich also für jedes Übertragungsintervall und für jeden Transportkanal ein Transportformat aus (also insgesamt eine TFC) und bestimmt von welchen logischen Kanälen Daten in dem betrachteten TTI übertragen werden. Dann teilt die MAC-Schicht den entsprechenden RLC-Einheiten die zum jeweiligen TF gehörende RLC-PDU-size und die Anzahl der erwarteten RLC-PDUs mit. RLC segmentiert daraufhin die Daten aus dem RLC-Buffer entsprechend der RLC-PDUsize und übergibt die entsprechende Anzahl an RLC-PDUs auf dem entsprechenden logischen Kanal an die MAC-Schicht. Diese fügt den Daten ggf. einen MAC-header hinzu und übergibt die gesamten MAC-PDUs für einen Transportkanal gleichzeitig an die physikalische Schicht, die dann für den Transport der Daten über die UMTS-Luftschnittstelle innerhalb eines TTI sorgt.

Im Folgenden werden sowohl der weitere Stand der Technik als auch die Erfindung anhand von Zeichnungen näher erläutert. Es zeigen:
- Figur 1: den Teil der Architektur des UMTS-Protokollstapels, welcher Protokolle der UMTS-Luftschnittstelle enthält;
- Figur 2: die Struktur der Radio Bearer Setup-Nachricht gemäß dem Stand der Technik;
- Figur 3: den aus dem Stand der Technik bekannten Aufbau des die Informationselemente (IE) der Transportkanale betreffenden Teils der Radio Bearer Setup-Nachricht;
- Figur 4: den Aufbau der Radio Bearer Mapping Option/Info gemäß dem Stand der Technik;
- Figur 5: den Aufbau der Radio Bearer Mapping Option/Info gemäß der Erfindung;
- Figur 6: die aus dem Stand der Technik bekannte Struktur des Transportformatsets (TFS);
- Figur 7: die Struktur des Transportformatsets (TFS) gemäß einem ersten Ausführungsbeispiel der Erfindung;
- Figur 8: die Struktur des TFS gemäß einem zweiten Ausführungsbeispiel der Erfindung;
- Figur 9A, B, C: die Radio Bearer Mapping Info gemäß dem Stand der Technik in tabellarischer Form
- Figur 10A, B: das Transportformatset gemäß dem Stand der Technik in tabellarischer Form;
- Figur 11A, B, C: die Radio Bearer Mapping Info gemäß einem ersten Ausführungsbeispiel der Erfindung in tabellarischer Form;
- Figur 12A, B: das Transportformatset gemäß einem ersten Ausführungsbeispiel der Erfindung in tabellarischer Form;
- Figur 12C, D: das Transportformatset gemäß einem zweiten Ausführungsbeispiel der Erfindung in tabellarischer Form.

### 1.3 Stand der Technik

Die WO00/28760 beschreibt ein Verfahren zur Übertragung von Sprach- und/oder Videodaten uber die Luftschnittstelle eines UMTS-Mobilfunknetzes. Dieses Verfahren ermöglicht es dem Netzbetreiber, den von einem Anwender genutzten Diensten jeweils unterschiedliche, sich ggf. von Übertragungsintervall zu Übertragungsintervall ändernde Datenübertragungsraten unter Beachtung eines von einer Kontrolleinheit vorgegebenen Maximalwertes individuell zuzuordnen. Dies setzt voraus, dass die den Datenstrom erzeugende Einheit (UE) eine den Randbedingungen (maximale Datenübertragungsrate für sämtliche der auf dem UE des Anwenders gestarteten Dienste) genügende Transportformatkombination (TFC) aus der Menge der verfügbaren TFCs dynamisch auswählt und das UE die von ihr getroffene Auswahl der empfangenden Einheit in einer die Funkressourcen schonenden Weise, insbesondere durch Übertragung einer nur wenige Bit langen Kennziffer, mitteilt.

Die Erfindung betrifft die Konfiguration von Datenkanälen zur Datenübertragung uber eine Luftschnittstelle eines Mobilfunksystems, insbesondere UMTS, von einer Mobilstation (UE), zu einem Knoten des Mobilfunksystems, insbesondere eines Radio Network Controler (RNC).

Bei der Beschreibung der Datenübertragung werden im Folgenden, wenn nötig, eine Sender- und eine Empfängereinheit unterschieden, wobei sowohl UE als auch RNC sowohl die Rolle des Senders als auch die Rolle des Empfängers einnehmen können. Beim Austausch von Konfigurationsdaten gibt es grundsätzlich eine konfigurierende Einheit, die die Konfigurationsparameter bestimmt und die als Sendeeinheit der Konfigurationsnachrichten dient, und eine konfigurierte Einheit, die die Konfigurationsparameter aufnimmt und als Empfängereinheit der Konfigurationsnachrichten dient. Im UMTS ist der RNC grundsätzlich die konfigurierende Einheit, das UE ist die konfigurierte Einheit. Der Empfang von Konfigurationsnachrichten mit Konfigurationsparametern kann durch das Zurücksenden von Empfangsbestätigungsnachrichten vom UE zum RNC quittiert werden, wobei diese Nachrichten ggf. von den im UE empfangenen Parametern abweichende Werte enthalten können.

Nutzdaten liegen in der Sendeeinheit in Form von kontinuierlichen Datenströmen oder Paketdatenstromen vor, die von unterschiedlichen Applikationen erzeugt oder an entsprechenden Schnittstellen von einer anderen Einheit empfangen und ggf. von verschiedenen Protokollen manipuliert, insbesondere segmentiert oder zu größeren Paketen zusammengefügt wurden. Diese Datenströme werden an Dienstzugangspunkten, den sog. logischen Kanälen, dem in [6] spezifizierten MAC-Protokoll übergeben, welches den Dienst der Übertragung der Datenströme über die UMTS-Luftschnittstelle anbietet.

Die in [8] beschriebene physikalische Schicht, die u.a. die Funktionalität der Antenne, Hochfrequenztechnik, Modulation und Kodierung der Daten beinhaltet, bietet an ihren Dienstzugangspunkten, den sog. Transportkanälen, den Dienst der Übertragung von Datenpaketen innerhalb von Übertragungsintervallen an. Dabei bilden die Größe und Anzahl der Datenpakete die innerhalb eines Übertragungsintervalls übertragen werden, die Lange des übertragungsintervalls und die auf die Daten angewendete Kodierung einen Satz von Parametern, der jeden Transportkanal zu einem Zeitpunkt auszeichnet und im Folgenden Transportformat (TF) genannt wird.

Die Aufgabe der MAC-Schicht ist es, die an den logischen Kanälen anliegenden Datenpakete auf die vorhandenen Transportkanale zu verteilen und dabei für jedes Übertragungsintervall und für jeden Transportkanal aus einer vorgegebenen Menge von Transportformaten, dem sog. "Transport Format Set" (TFS), ein geeignetes Transportformat auszuwählen. Die Art der Verteilung der verschiedenen logischen Kanäle auf die vorhandenen Transportkanäle ist dabei eingeschränkt durch eine Tabelle, die sog. "RB Mapping Info", die jedem logischen Kanal eindeutig diejenigen Transportkanale zuweist, die für eine Übertragung genutzt werden dürfen.

Der Aufbau, die Umkonfiguration und der Abbau von logischen Kanälen und Transportkanälen sowie die Aushandlung der von der MAC-Schicht benötigten RB Mapping Info und der TFSs der einzelnen Transportkanäle wird von dem in [7] spezifizierten RRC-Protokoll durchgeführt. Das RRC-Protokoll im RNC entscheidet dazu fur jeden Transportkanal über die Auswahl der Parameter jedes einzelnen TFs und über die Anzahl der TFs innerhalb eines TFS und über die RB Mapping Info und stellt diese in einer Konfigurationsnachricht bzw. einer Re-Konfigurationsnachricht mit anderen Informationen zusammen. Diese Nachricht wird dann vom RNC an das UE gesendet und dort dem RRC-Protokoll zugeführt. Die darin enthaltenen Parameter werden anschließend an die MAC-Schicht übergeben. (Die MAC-Schicht im RNC kann direkt von der RRC-Schicht im RNC konfiguriert werden.)

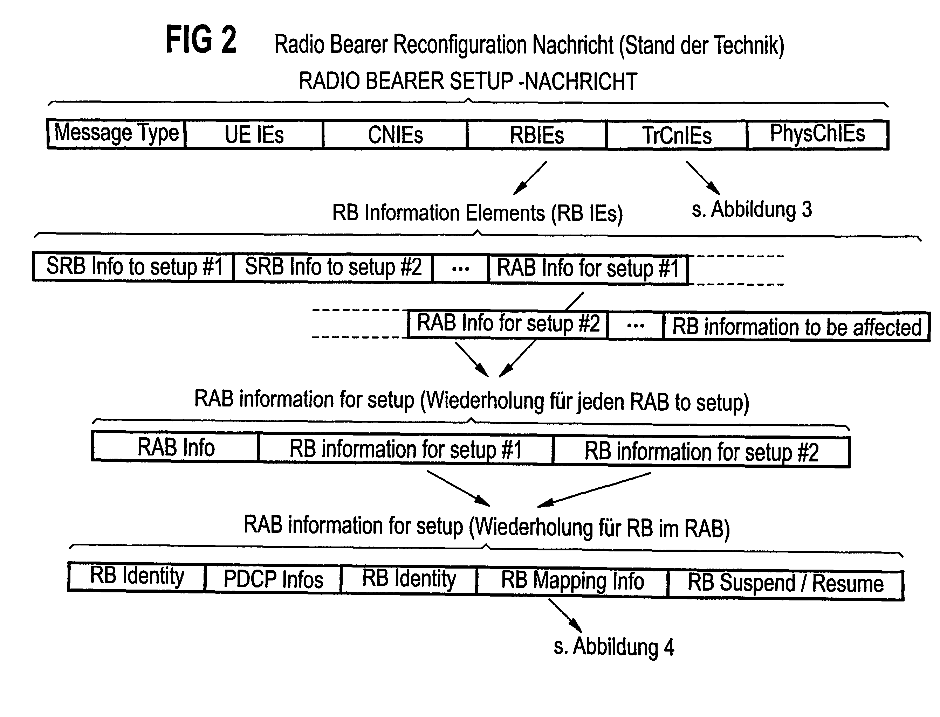

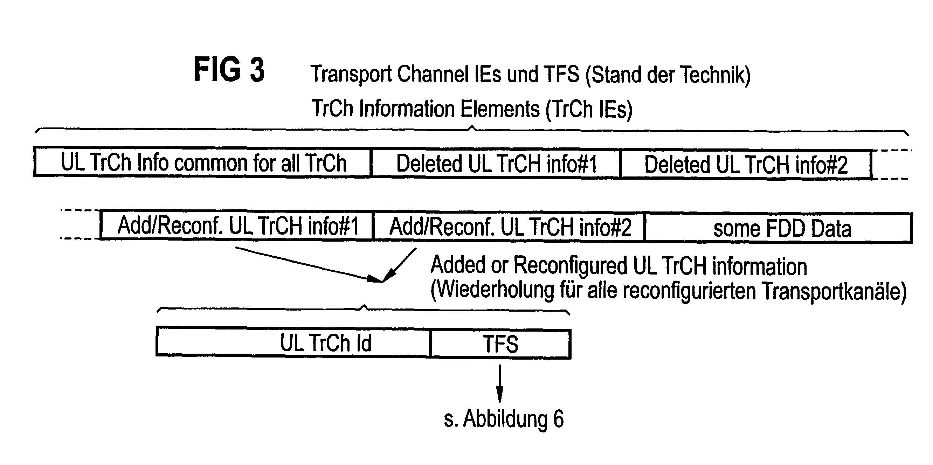

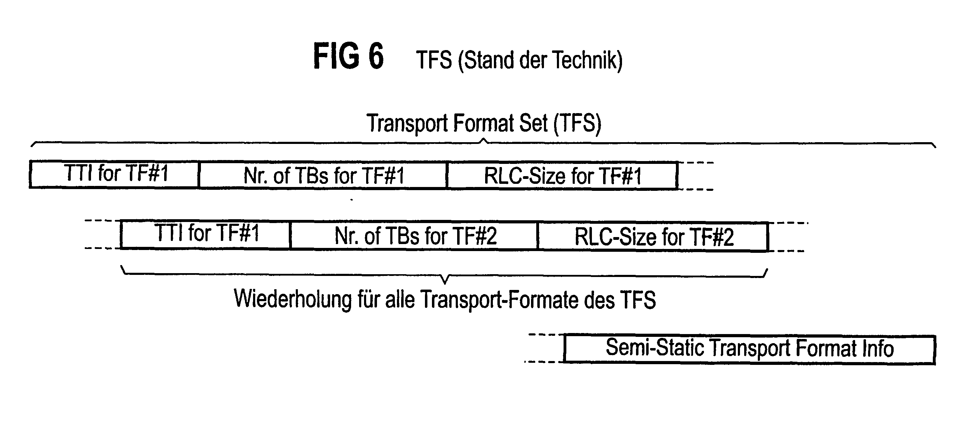

Die RRC-(Re-)Konfigurationsnachricht kann in verschiedenen Formen beispielsweise als RADIO BEARER RECONFIGURATION, RADIO BEARER SETUP oder TRANSPORT CHANNEL RECONFIGURATION vorliegen. Schematisch ist in den Figuren 2 und 3 die in [7] beschriebene RADIO BEARER SETUP Nachricht dargestellt. In diesen Nachrichten wird unabhängig voneinander die RB Mapping Option, die für jede Mapping-Option einem logischen Kanal einen Transportkanal zuweist, und die TFSs der verschiedenen Transportkanäle, die eine Liste von gültigen TFs mit den dynamischen und semi-statischen Parametern enthält (siehe Figur 6) angegeben.

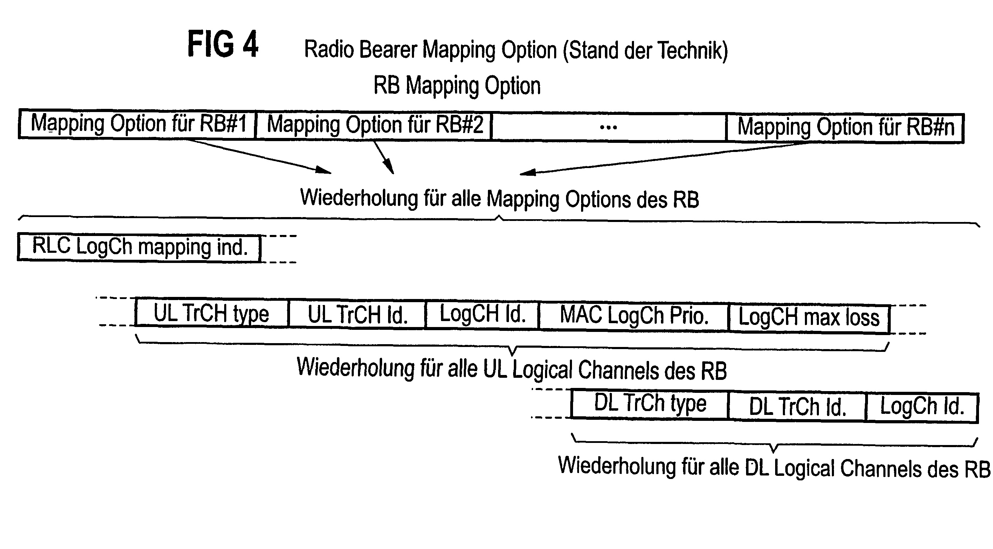

Die RB Mapping Info ist beispielhaft in Figur 4 gezeigt. Wie man sieht besteht in dem dort gezeigten Beispiel eine Multiplexing Option für eine bestimmten Radio Bearer aus folgenden Angaben pro Richtung (Uplink, UL, und Downlink, DL) und pro logischem Kanal, der von diesem RB genutzt wird:
- Transportkanaltypen ("Tr Ch type")
- Identifikationsnummer des Transportkanals, auf den der logische Kanal fur die Option gemappt werden soll (Tr Ch Id)
- Identifikationsnummer des logischen Kanals, die fur diesen Transportkanal eindeutig ist (Log Ch Id)
- für den UL eine Priorisierungsinformation des logischen Kanals gegenüber den anderen auf diesen Transportkanal gemappten logischen Kanälen und eine Angabe über den maximalen Datenratenverlust zugunsten von anderen logischen Kanälen (MAC Log Ch Prio. bzw. Log Ch max loss).

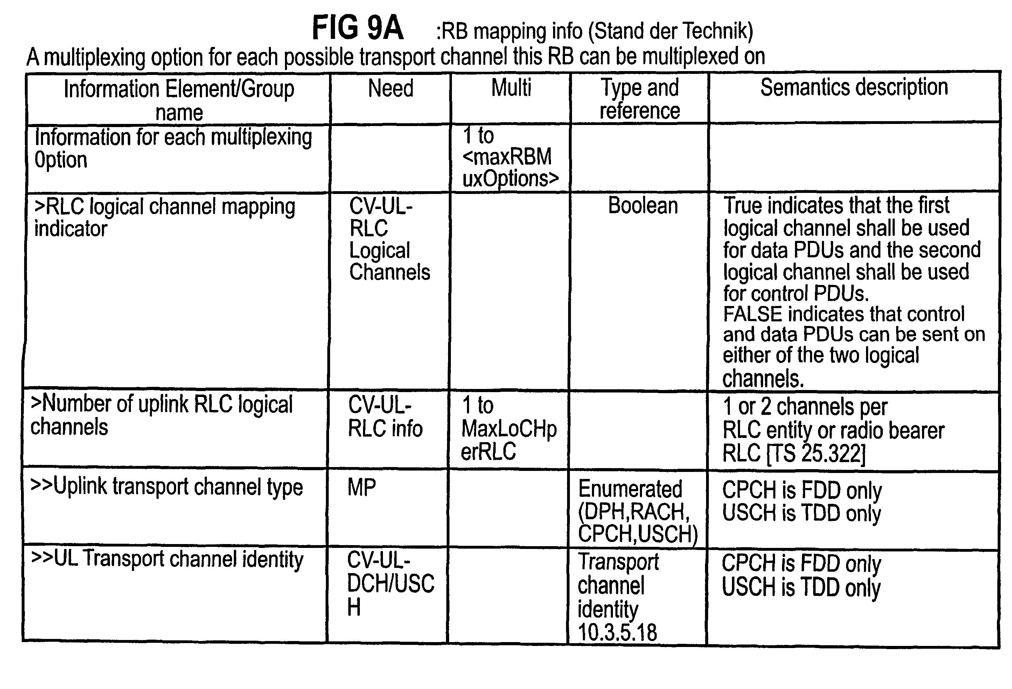

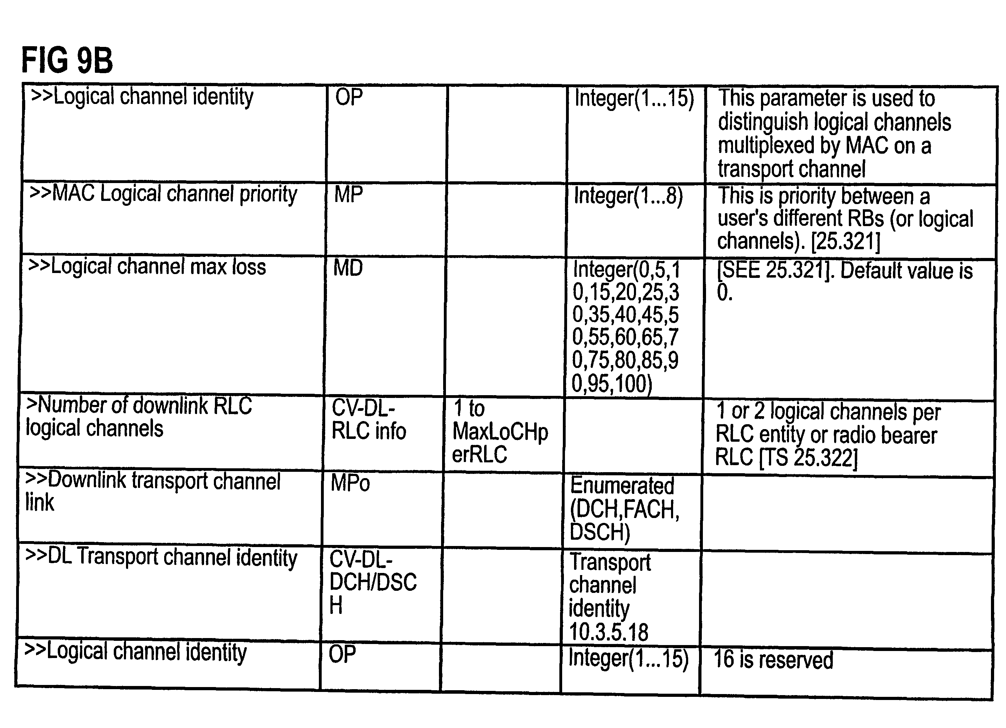

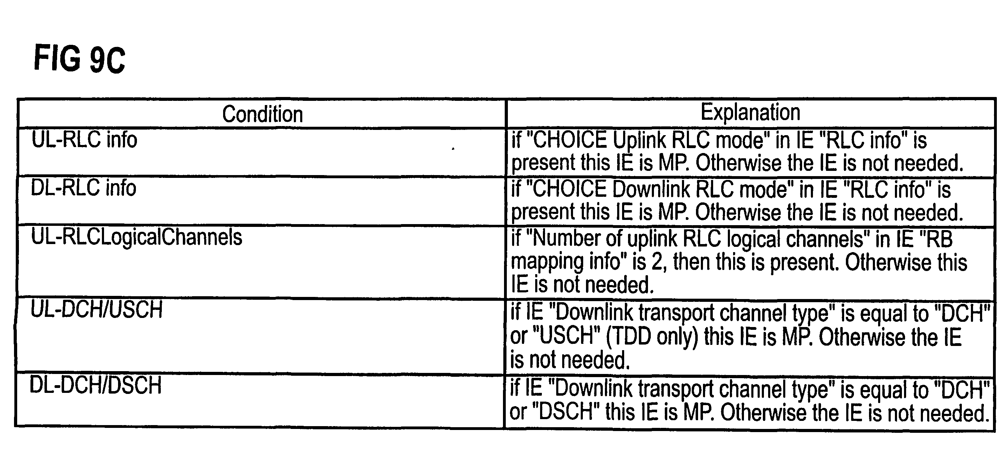

Die eindeutige tabellarische Repräsentation der RB Mapping Info ist in den Figuren 9A, 9B und 9C [7] dargestellt. Hierin sind in Zeilen die verschiedenen Elemente des IE (Informationselement) eingetragen und in der ersten Spalte der Name des Elements und ggf. eine hierarchische Gliederung des Elements mithilfe des Zeichens ">", in der zweiten Spalte eine Angabe darüber, ob das Element vorhanden sein muss (MP = "Mandatory Present", OP = "Optional", CV X = "Conditional Value", also abhängig von X, wobei X unter der Tabelle definiert wird), in der dritten Spalte ggf. eine Angabe uber das mehrfache Vorhandensein des Elements und in weiteren Spalten weitere Informationen. Die Angabe "OP" bewirkt, dass in einer Bit-Repräsentation das IE zunächst mit Informationen beginnt, die angeben, ob weitere Informationen dieses Elementes vorhanden sind. Da diese Informationen beispielsweise durch ein einzelnes Bit dargestellt werden können, können optionale Informationselemente bei Nicht-Vorhandensein der Information übertragungsbandbreite sparen.

Die erste Zeile in Tabelle I besagt also, dass alle in der Tabelle folgenden Elemente, die mit mindestens einem ">" eingeruckt sind, sich so oft wiederholen, wie dieses erste Element angibt (in diesem Fall ein Wert zwischen 1 und 8). Die zweite Zeile besagt, dass sich alle mit ">>" eingerückten Elemente entweder 1 oder 2 mal wiederholen, je nachdem ob der betrachtete RB einen oder zwei logische Kanäle für den UL verwendet. Die Zeilen 3 - 6 enthalten die o.g. IEs, die die eigentliche RB Mapping Info ausmachen. Die Informationen der Zeilen 3 - 5 wiederholen sich dann für die DL Transportkanäle.

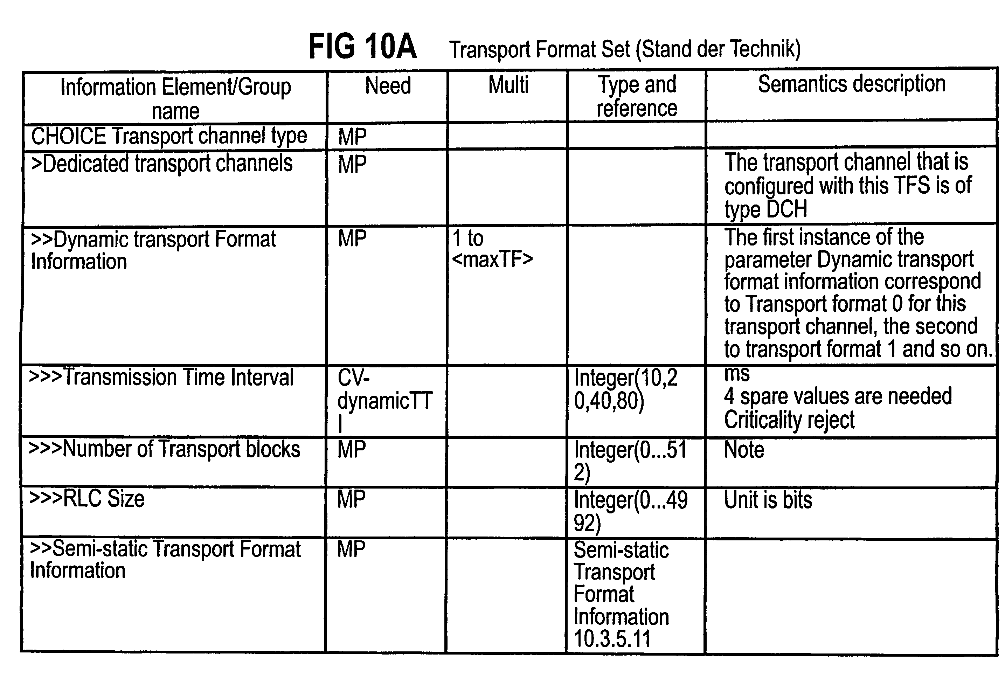

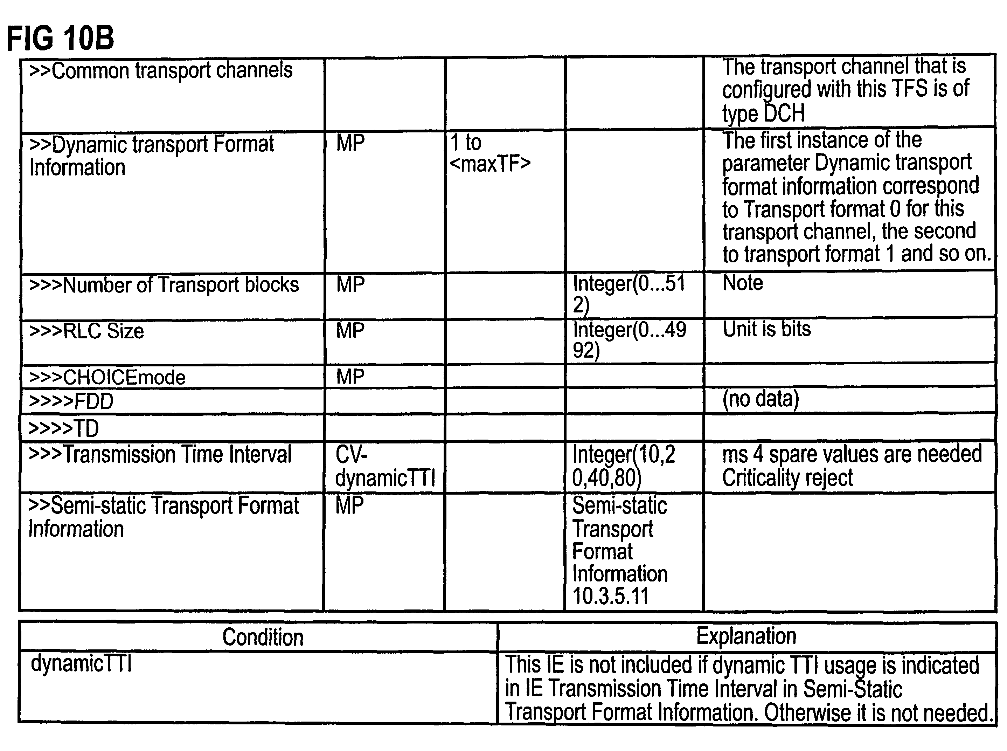

Ebenso ist in den Figuren 10A und 10B [7] die tabellarische Repräsentation des TFS dargestellt. Darin wird in der ersten Zeile zwischen Dedicated Transport Channels und Common Transport Channels durch eine Auswahl ("CHOICE") unterschieden. Es folgt dann eine Aufzählung der Dynamic Transport Format Information, bestehend aus RLC-size, Number of Transport Blocks (und ggf. TTI), die sich für jedes Transportformat mit anderen Werten wiederholt. Da sich die Semi-Static Transport Format Information der verschiedenen Transportformate innerhalb eines TFS nicht unterscheidet, wird es nur einmal angegeben.

### 2. Kern und Vorteil der Erfindung

Der Kern dieser Erfindung ist die Erweiterung von RRC-(Re-)Konfigurationsnachrichten um eine Möglichkeit, die zu konfigurierenden logischen Kanäle so einzuschränken, dass sie nur bestimmte in der (Re-)Konfigurationsnachricht enthaltene Transportformate nutzen können. Es wird also die Unabhangigkeit der RB Mapping Info von der Angabe der TFSs aufgehoben, indem in einer Erweiterung der entsprechenden RRC-Nachrichten eine Zuordnung zwischen Transportformaten und logischen Kanälen eingefügt wird, wobei die entsprechenden logischen Kanäle natürlich für ein Mapping auf den entsprechenden Transportkanal konfiguriert sein müssen. Insbesondere werden logische Kanale auf die Verwendung bestimmter Werte des Parameters RLC-size eingeschränkt.

Der Vorteil dieser Erfindung ist, dass dem RNC eine Möglichkeit gegeben wird, die Datenübertragung mehrerer Datenstrome so zu konfigurieren, dass sie über denselben Transportkanal übertragen werden und trotzdem jedem Datenstrom ein eigenes Transportformat, insbesondere eine eigene RLC-size, zugeordnet werden kann.

Besonders vorteilhaft ist dabei, dass allen Datenströmen, die über einen Transportkanal übertragen werden und deren Transportformate deshalb Teil desselben TFS sind, ein Satz von "semi-statischen" Parametern gleich ist. Datenstrome mit gleichen Anforderungen an die Kodierungsart und Redundanzdatenlänge werden so besonders vorteilhaft über denselben Transportkanal übertragen.

Besonders vorteilhaft ist es auch, dass sich bei diesem Verfahren insbesondere die Parameter der Datenblockgröße und ihrer Anzahl innerhalb eines Übertragungsintervalls sowie ggf. die Länge des Übertragungsintervalls zwischen den logischen Kanälen, die über einen Transportkanal übertragen werden, unterscheiden können. Da sich aus der Kombination dieser Parameter die augenblickliche Datenrate ergibt, kann so höchst effizient die Datenrate jedes einzelnen logischen Kanals festgelegt werden.

Durch diese Datenraten-Variation pro logischem Kanal können insbesondere unregelmäßige Datenströme effizient über die UMTS-Luftschnittstelle übertragen werden, was einen weiteren Vorteil der Erfindung darstellt.

Die besonders vorteilhafte Einschränkung der Verwendung des Parameters RLC-size auf bestimmte logische Kanäle hat den besonderen Vorteil, dass die Anzahl von während eines TTIs übertragenen RLC-PDUs eines logischen Kanals vom MAC-Protokoll weiterhin beeinflusst werden kann, wahrend die dabei verwendete RLC-size für jeden logischen Kanal feststeht.

### 3. Ausfuhrungsbeispiele der Erfindung

Grundsätzlich gibt es drei Möglichkeiten, die RRC-(Re-) Konfigurationsnachrichten in der oben beschriebenen Weise zu erweitern:
1. Durch Erweiterung der RB Mapping Info. Jede Mapping Option muss dabei um die Möglichkeit der Angabe eines oder mehrerer Transportformate aus dem TFS des Transportkanals, auf den der logische Kanal gemappt wird, erweitert werden.
2. Durch Erweiterung des TFS. Jedes Transportformat innerhalb eines TFS muss dabei um die Möglichkeit der Angabe eines oder mehrerer logischer Kanale aus der Menge der logischen Kanäle, die auf den jeweiligen Transportkanal gemappt werden, erweitert werden.
3. Durch Erweiterung der RRC-(Re-) Konfigurationsnachrichten unabhangig von den bestehenden Informationselementen (IEs) RB Mapping Info und TFS. Es muss dabei für jede gültige Kombination von logischem Kanal und Transportkanal eine Angabe der gültigen Transportformate aus dem TFS in die Nachricht eingefügt werden.

### 3.1 Erweiterung der RB Mapping Info

Um die RB Mapping Info erfindungsgemäß sinnvoll zu erweitern, muss für jeden logischen Kanal, dem in dem IE ein Transportkanal zugewiesen wird, auch eine Liste von Transportformaten angegeben werden, die in dem TFS des jeweiligen Transportkanals definiert sind und die für den logischen Kanal genutzt werden sollen.

Besonders vorteilhaft ist die Erweiterung der RB Mapping Info, weil eine Umkonfiguration der Zuordnung von Transportformaten zu logischen Kanälen in solchen RRC-Nachrichten besonders einfach und effizient ist, in denen die RB Mapping Info bereits für andere Umkonfigurationen in der Nachricht vorhanden ist.

Sinnvollerweise wird das zusätzliche IE, dem hier der Name "TF to use list" gegeben wird, für jeden logischen Kanal auf der gleichen hierarchischen Ebene wie die Transport Channel Identity angegeben.

Grundsätzlich könnte die Existenz des Informationselements zwingend vorgeschrieben sein, besonders vorteilhaft ist aber das IE optional zu machen und festzulegen, dass, wenn es nicht präsent ist, alle Transportformate von dem logischen Kanal genutzt werden können. Das hat insbesondere den Vorteil, dass, wenn es nur ein TF im TFS gibt oder alle TFs von dem logischen Kanal genutzt werden sollen, keine unnötigen Daten versendet werden müssen.

Eine weitere Möglichkeit ware, innerhalb der RB Mapping Info zunächst diejenigen logischen Kanäle aufzulisten, die alle Transportformate des jeweiligen Transportkanals nutzen können und danach optional eine weitere Liste von logischen Kanälen mit der "TF To Use List" anzugeben. Dieses Verfahren wäre besonders vorteilhaft, weil für alle logischen Kanäle, die alle Transportformate des jeweiligen Transportkanals nutzen können, keinerlei überflüssige Informationen, also nicht einmal die Informationen, die die Option (vorhanden/nicht-vorhanden) darstellen, übertragen werden müssen. Ebenso kann die Präsenz des IE TF To Use List dann mandatory, also verpflichtend sein, und es muss auch hier keinerlei Information übertragen werden, die die Option darstellt. Da das zuerst genannte Verfahren sich leichter in UMTS integrieren lässt, wird in den Figuren nur dieses Verfahren gezeigt.

Innerhalb eines TFS werden die Dynamischen Transportformat Informationen der Reihe nach fur das Transportformat 0, 1, ... angegeben. Innerhalb des neuen IE "TF To Use List" ist es deshalb einfach möglich, eine Liste von Indize zu erstellen, in der jeder Index auf ein Transportformat innerhalb des TFS verweist.

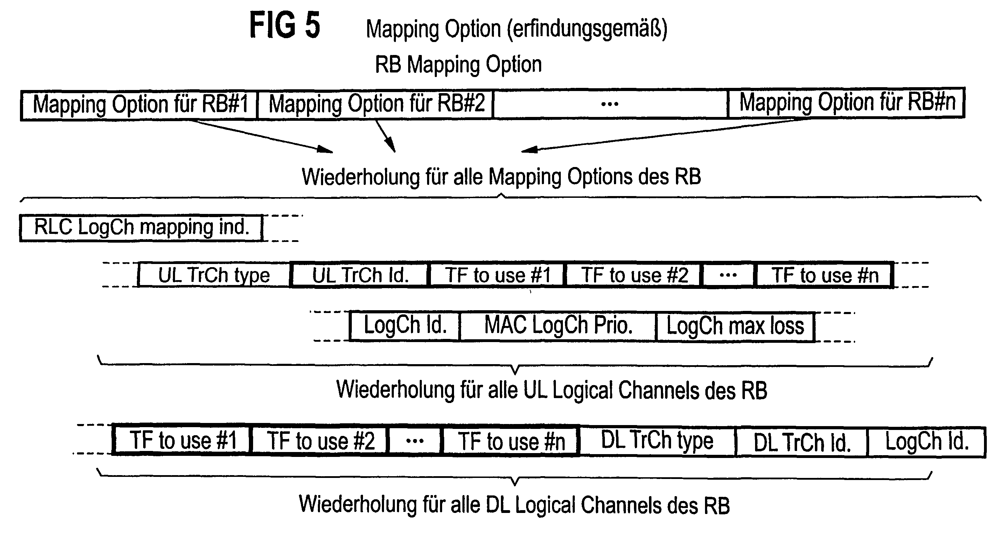

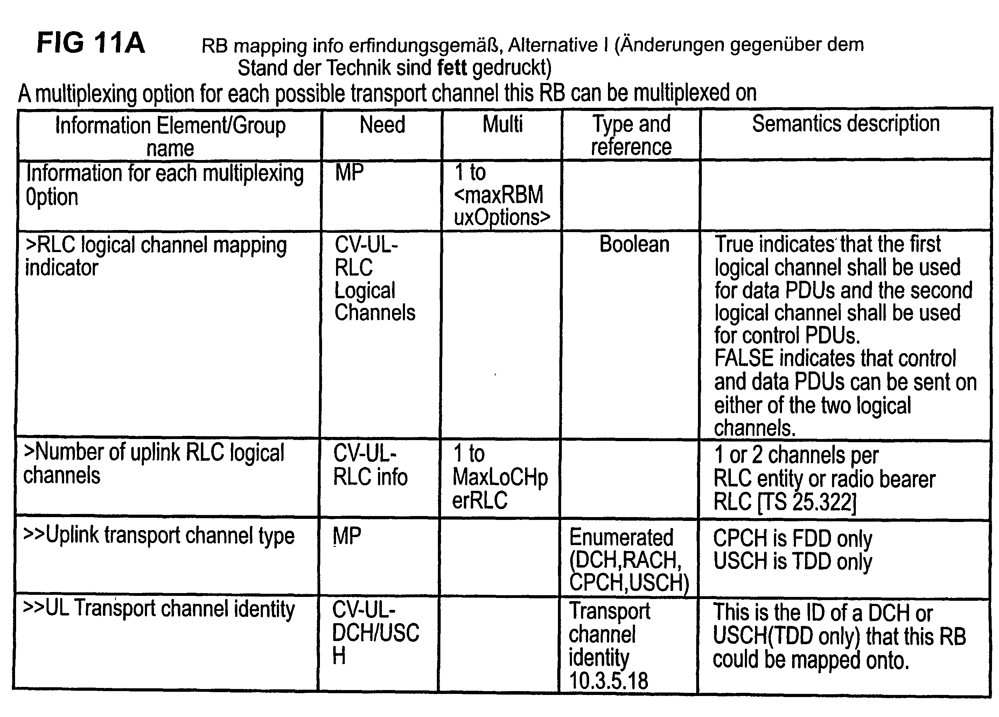

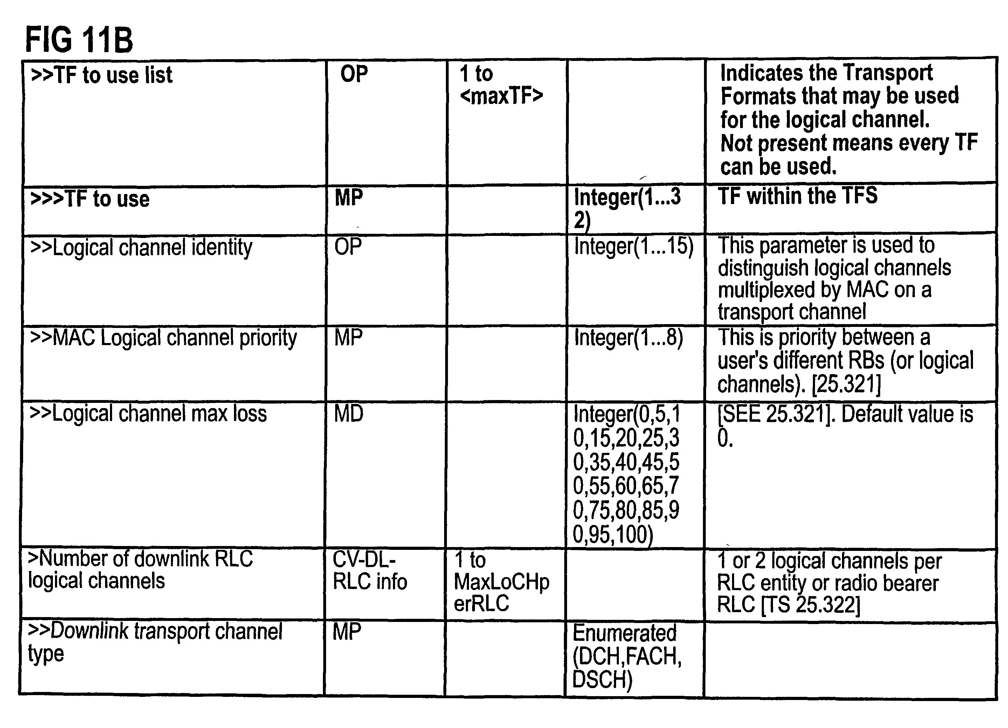

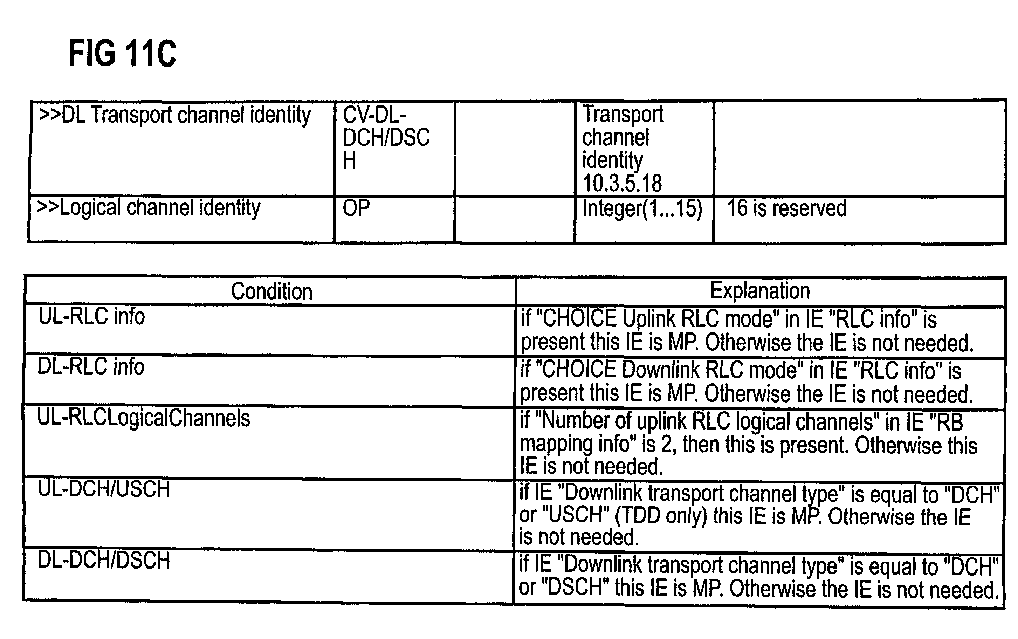

Eine schematische Abbildung des erfindungsgemäß erweiterten IE RB Mapping Info und die sich daraus ergebende tabellarische Darstellung sind in den Figuren 5 und 11 - 13 fur die verschiedenen hier beschriebenen Optionen dargestellt.

### 3.2 Erweiterung des TFS

Um das TFS erfindungsgemäß sinnvoll zu erweitern, muss fur jedes Transportformat, also für jedes Vorkommen des IE "Dynamic Transport Format Information" eine Liste von logischen Kanälen angegeben werden, die dieses Transportformat nutzen können.

Besonders vorteilhaft ist die Erweiterung des TFS, weil eine Umkonfiguration der Zuordnung von Transportformaten zu logischen Kanälen in solchen RRC-Nachrichten besonders einfach und effizient ist, in denen das TFS bereits für andere Umkonfigurationen in der Nachricht vorhanden ist.

Sinnvollerweise wird das zusätzliche IE, dem hier der Name "Log Ch To Use List" gegeben wird, für jedes Transportformat, also als ein neues IE in der "Dynamic Transport Format Information" auf gleicher hierarchischer Ebene wie das IE RLC-size angegeben.

Grundsätzlich konnte die Existenz des Informationselements zwingend vorgeschrieben sein, besonders vorteilhaft ist aber das IE optional zu machen und festzulegen, dass, wenn es nicht präsent ist, alle logischen Kanale dieses Transportformat nutzen können. Das hat insbesondere den Vorteil, dass, wenn es nur einen logischen Kanal auf diesem Transportkanal gibt oder alle logischen Kanäle das TF nutzen können sollen, keine unnötigen Daten versendet werden müssen.

Eine weitere Möglichkeit besteht darin, innerhalb des TFS zunächst diejenigen Transportformate aufzulisten, die für alle logischen Kanäle gleich sind und danach optional eine weitere Liste von Transportformaten mit der Log Ch To Use List anzugeben. Dieses Verfahren ist deshalb besonders vorteilhaft, weil für alle Transportformate, die von allen logischen Kanälen genutzt werden sollen, keinerlei uberflussige Informationen, also nicht einmal die Informationen, die die Option darstellen, übertragen werden müssen. Ebenso kann die Präsenz des IE Log Ch To Use List dann mandatory, also verpflichtend sein, und es muss auch hier keinerlei Information übertragen werden, die die Option darstellt. Da das zuerst genannte Verfahren sich leichter in UMTS integrieren lasst, wird in den Zeichnungen nur dieses Verfahren gezeigt.

Innerhalb der RB Mapping Info werden jedem logischen Kanal für jeden Transportkanal, auf den er gemappt werden kann, eindeutige Logical Channel Identities vergeben. Innerhalb des neuen IE "Log Ch To Use List" ist es deshalb einfach möglich, eine Liste von Logical Channel Identities zu erstellen, in der jeder Eintrag eindeutig einen logischen Kanal identifiziert, der das jeweilige TF nutzen kann.

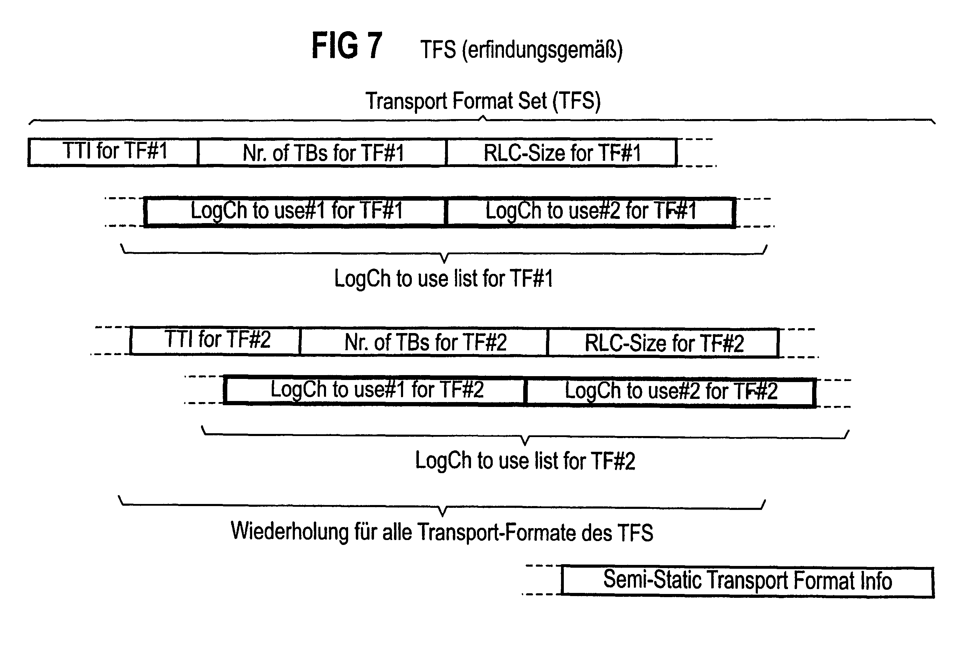

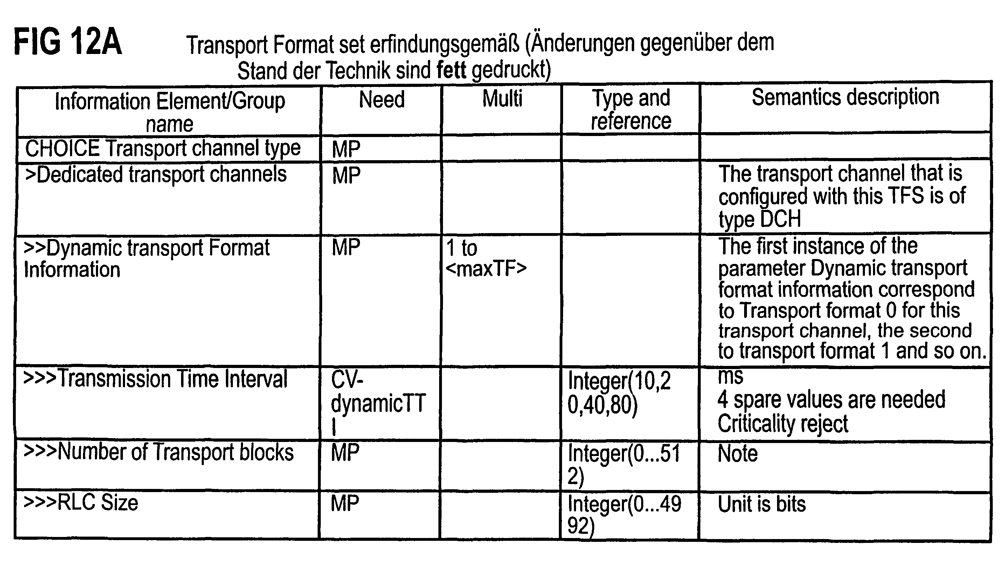

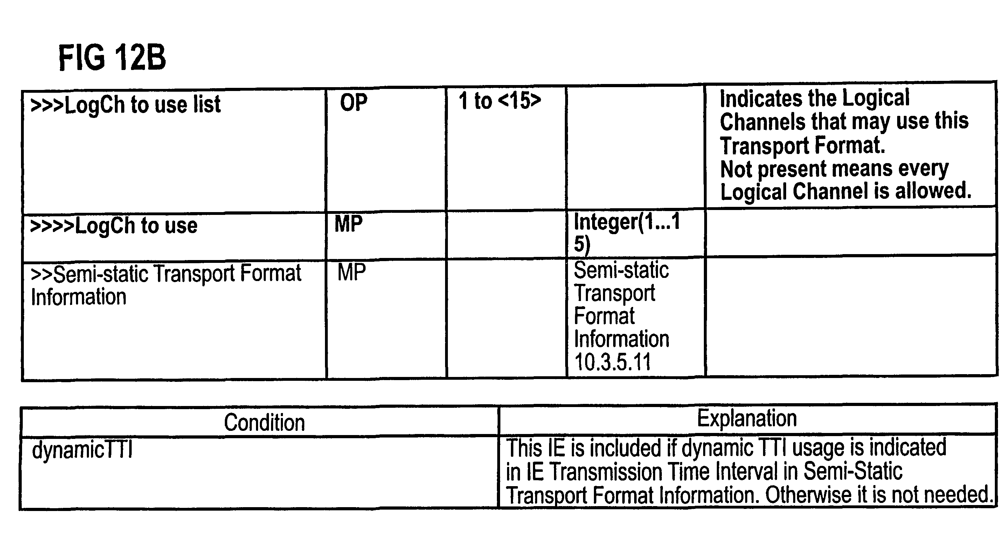

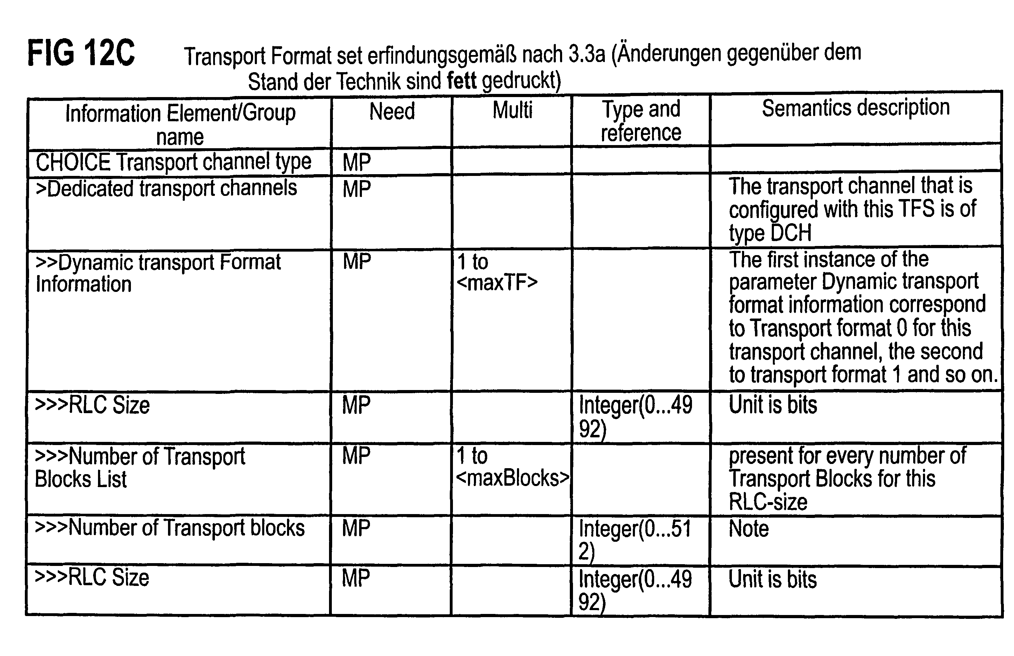

Eine schematische Abbildung des erfindungsgemäß erweiterten IE TFS und die sich daraus ergebende tabellarische Darstellung sind in den Figuren 7 und 12A/B für die verschiedenen hier beschriebenen Optionen dargestellt.

### 3.2 a) Erweiterung des TFS um die Einschränkung der RLC-size

Um das TFS für die besonders vorteilhafte Einschränkung des Parameters RLC-size für bestimmte logische Kanäle zu erweitern, wird folgender besonders effizienter Aufbau des TFS innerhalb einer RRC-(Re-) Konfigurationsnachricht vorgeschlagen:

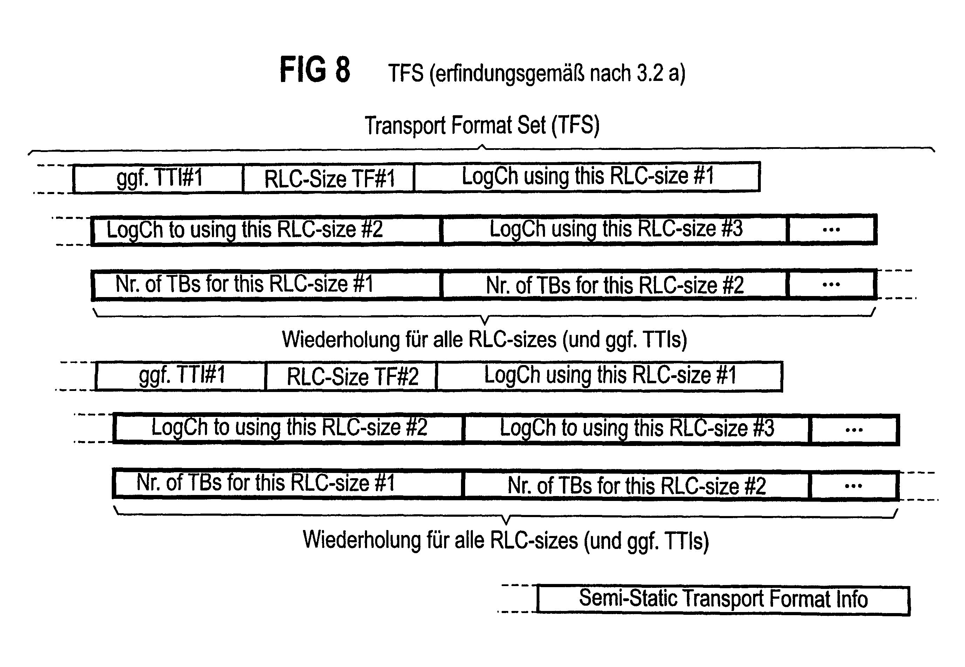

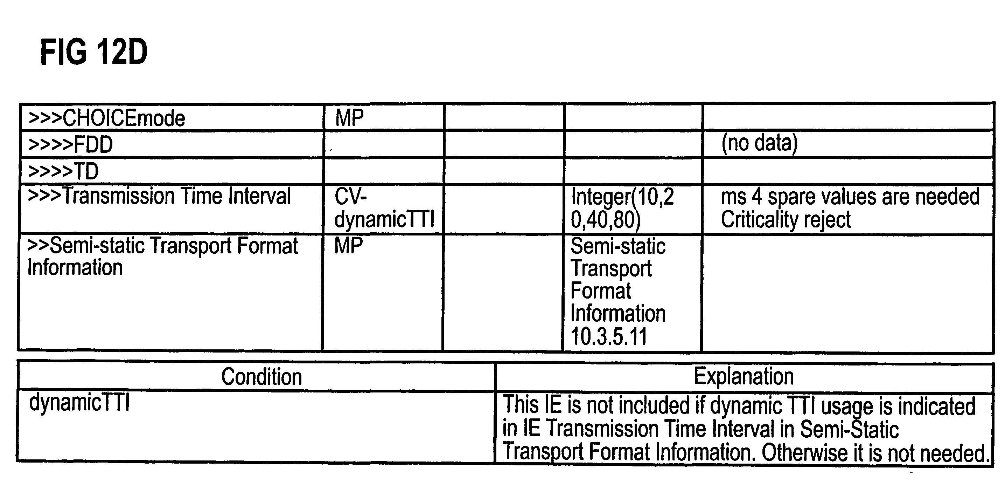

Innerhalb des TFS, in der Angabe der "Dynamic Transport Format Information", werden neben dem ggf. vorhandenen TTI die Transportformate, die die gleiche RLC-size aufweisen, zusammen angegeben. Dazu wird nicht wie im Stand der Technik für jedes Transportformat RLC-size und Number of Transport Blocks aufgelistet, sondern es wird jede RLC-size zusammen mit einer Liste der Parameter "Number of Transport Blocks" und einer optionalen, erfindungsgemaßen Liste der diese RLC-size nutzenden logischen Kanäle aufgefuhrt. Diese Ausführung ist schematisch in Figur 8 und tabellarisch in den Figuren 12C/D dargestellt.

Diese Ausführung hat den Vorteil, dass jeder Ausprägung des Parameters RLC-size eine Liste von logischen Kanälen zugeordnet werden kann, und dass so die Datenübertragung für diese Kanale effizient beeinflusst werden kann.

Ein weiterer Vorteil ist, dass bei dieser Ausführung nicht der Parameter "Number of Transport Blocks" für die logischen Kanäle eingeschränkt wird, und dass so das MAC-Protokoll die Anzahl der von einem logischen Kanal pro TTI übertragenen RLC-PDU dynamisch beeinflussen und so die aktuell vorhandenen übertragungsressourcen anpassen kann.

Ein weiterer Vorteil dieser Ausführung ist, dass auch ohne die Einschränkung der Zuordnung von logischen Kanälen zum Parameter "RLC-size" die "Sortierung" der Transportformate nach RLC-sizes und Auflistung der Ausprägungen des Parameters "Numbers of Transport Blocks", zu übertragene Daten gegenüber dem Stand der Technik eingespart werden.

Speziell fur UMTS wird dieses Verfahren als das effizienteste und gunstigste angesehen!

### 3.3 Unabhängige Erweiterung

Um eine RRC-(Re-) Konfigurationsnachricht erfindungsgemäß unabhängig von anderen IEs zu erweitern, ist das Einfügen einer Liste von Zuordnungen von logischen Kanälen zu Transportkanälen und Transportformaten notwendig.

Besonders vorteilhaft ist diese Erweiterung, weil sie nicht das Vorhandensein der IEs RB Mapping Info oder TFS bedingt und deshalb ohne diese IEs effizient übertragen werden kann.

Sinnvollerweise wird das zusätzliche IE entweder direkt in die RRC-(Re-) Konfigurationsnachricht oder in ein in ihr enthaltenes IE, z.B. "RB Info to Reconfigure" eingefugt. Das neue IE besteht entweder aus einer Aufzählung der Transportkanäle und ihrer Transportformate und einer Zuordnung zu den in der RB Mapping Info vergebenen logische Kanäle und einer Zuordnung zu Transportkanälen und den entsprechenden Transportformaten.

Da dieses Verfahren denen unter 3.1 und 3.2 sehr ähnlich, seine Anwendung in UMTS jedoch also nicht so effizient wie diese Verfahren angesehen wird, wird hier keine gesonderte Zeichnung oder Tabelle angegeben.

### 3.4 Kombinationen aus den Verfahren

Besonders vorteilhaft ist eine Kombination aus den oben genannten Verfahren, das heißt es werden Erweiterungen sowohl der RB Mapping Info als auch des TFS und eventuell auch eine unabhängige Angabe der Zuordnung von logischem Kanal zu Transportformat gemacht.

Dies hat den besonderen Vorteil in allen RRC-(Re-) Konfigurationsnachrichten eine sehr effiziente Übertragung der Zuordnungsdaten zu ermöglichen.

### 4. Referenzen

[1] Mobilfunknetze und ihre Protokolle, S. 66, B. Walke, Teubner, 2000
[3] RFC 0783, Transmission Control Protocol (TCP), IETF, September 1981
[4] RFC 0791, Internet protocol (IP), IETF, September 1981
[5] TS 25.322, Radio Link Control, 3GPP, Juni 2000
[6] TS 25.321, Medium Access Control, 3GPP, Juni 2000
[7] TS 25.331, Radio Resource Control, 3GPP, Juni 2000
[8] TS 25.302, Services Provided by Physical Layer, 3GPP, Juni 2000

### 5. Häufig benutzte Abkurzungen

Grundsätzlich: Mehrzahlbildung durch Anhangen eines 's', z.B.: ein RB, zwei RBs
- DL: Downlink
- PDU: Protocol Data Unit
- QoS: Quality of Service
- RB: Radio Bearer
- RNC: Radio Network Controler
- TF: Transport Format SDU Service Data Unit
- TFC: Transport Format Combination
- TFCS: Transport Format Combination Set
- TFS: Transport Format Set
- TTI: Transmission Time Intervall
- UE: User Equipment
- UL: Uplink

## Patentansprüche

1. Verfahren zur Übertragung von Datenpaketen über eine Luftschnittstelle eines Mobilfunksystems, wobei das Verfahren die folgenden Schritte aufweist:
a) eine Kontroll- und Steuereinheit (RRC) teilt einer dieser untergeordneten ersten Einheit (MAC) einer Sicherungsschicht (L2) über deren als Dienstzugangspunkte dienenden logische Kanale in Form einer Konfigurationsnachricht mit,
1.) welche logischen Kanale auf welche als Dienstzugangspunkte einer Bitübertragungsschicht (L1) dienenden Transportkanäle abzubilden sind,
2.) die fur jeden der Transportkanäle vorgegebene Menge (TFS) von Transportformaten (TF) sowie die Menge (TFCS) der erlaubten Kombinationen von Transportformaten (TF) für alle Transportkanäle, wobei jedes Transportformat (TF) einen die Übertragungseigenschaften des mit dem entsprechenden Transportformat (TF) konfigurierten Transportkanal bestimmenden Satz von Parametern aufweist und
3.1.) welche Transportformate (TF) für einen logischen Kanal jeweils zugelassen sind oder
3.2.) welcher Wert zumindest eines der Parameter aus dem Parametersatz der Transportformate (TF) fur einen logischen Kanal, fur mehrere logische Kanäle oder fur alle logischen Kanäle fest vorgegeben ist;
b) die erste Einheit (MAC) der Sicherungsschicht wahlt unter Beachtung der in der Konfigurationsnachricht definierten Zuordnung zwischen Transportformaten (TF) und logischen Kanälen bzw. des den logischen Kanälen jeweils vorgegebenen Parameterwertes ein Transportformat (TF) fur jeden der Transportkanäle derart aus, dass die gebildete Kombination von Transportformaten (TF) einer der als zulassig definierten Transportformat-Kombinationen entspricht und
c) die erste Einheit (MAC) der Sicherungsschicht (L2) übergibt die an den logischen Kanälen anliegenden Datenpakete an die den logischen Kanälen durch die Konfigurationsnachricht jeweils zugeordneten Transportkanäle einer Bitubertragungsschicht (L1) und diese veranlasst die Übertragung der Datenpakete über die Luftschnittstelle.

2. Verfahren nach Anspruch 1,
**dadurch gekennzeichnet,**
**dass** der ein Transportformat bildende Satz von Parametern aus einer durch die Kontroll- und Steuereinheit (RRC) vorgegebenen ersten Gruppe statischer Parameter und einer durch die erste Einheit (MAC) der Sicherungsschicht (L2) beeinflussbarer zweiten Gruppe variabler Parameter besteht.

3. Verfahren nach Anspruch 2,
**dadurch gekennzeichnet,**
**dass** die Länge eines Übergangsintervalls innerhalb dessen die Bitubertragungsschicht (L1) Daten zusammenhängend verarbeiten kann als statischer oder variabler Parameter dient.

4. Verfahren nach Anspruch 2,
**dadurch gekennzeichnet,**
**dass** die Größe oder Länge der den Transportkanälen von der ersten Einheit (MAC) der Sicherungsschicht (L2) übergebenen Datenblöcke (Transportblock) und die Anzahl dieser Datenblöcke als variable Parameter dienen.

5. Verfahren nach einem der Ansprüche 1 bis 4,
**dadurch gekennzeichnet,**
**dass** eine zweite Einheit (RLC) der Sicherungsschicht (L2) aus dem an einem Dienstzugangspunkt (Radio Bearer) für einen Tragerdienst anliegenden Datenstrom Datenpakete erzeugt und nach Anforderung durch die erste Einheit (MAC) der Sicherungsschicht (L2) zugeordneten logischen Kanäle übergibt.

6. Verfahren nach Anspruch 5,
**dadurch gekennzeichnet,**
**dass** die zweite Einheit (RLC) der Sicherungsschicht (L2) den uber den Dienstzugangspunkt (Radio Bearer) eingespeisten Datenstrom zwischenspeichert.

7. Verfahren nach Anspruch 5 oder Anspruch 6,
**dadurch gekennzeichnet,**
**dass** die Länge und Anzahl der von der zweiten Einheit (RLC) der Sicherungsschicht (L2) erzeugten Datenpakete der Lange und Anzahl der den Transportkanälen von der ersten Einheit (MAC) der Sicherungsschicht (L2) übergebenen Datenblocken entspricht.

## Claims

1. Method for the transmission of data packets via a radio interface of a mobile radio system, featuring the following steps:
a) a control unit (RRC) of a first entity (MAC) secondary to this in a data link layer transmits information via its logical channels serving as service access points in the form of a configuration message,
1.) about which logical channels are to be mapped onto which transport channels serving as service access points for a bit transmission layer,
2.) about the set (TFS) of transport formats (TF) predetermined for each of the transport channels and the set (TFCS) of permitted combinations of transport formats (TF) for all transport channels, with each transport format having a set of parameters determining the transmission characteristics of the transport channel configured with the corresponding transport format and
3.1) about which transport formats (TF) are permitted for each logical channel or
3.2) about which value is predetermined as fixed for at least one of the parameters from the parameter set for transport formats for one logical channel, for a number of logical channels or for all logical channels,
b) the first entity (MAC) selects a transport format for each of the transport channels taking into account the assignment defined in the configuration message of transport formats to logical channels or of the parameter value predetermined for each of the logical channels, in such a manner that the resulting combination of transport formats corresponds to one of the transport combinations defined as permissible and
c) the first entity (MAC) transmits the data packets at the logical channels to the transport channels of the bit transmission layer assigned to each of the logical channels by the configuration message and initiates the transmission of the data packets via the radio interface.

2. Method according to Claim 1,
**characterized in that**
the set of parameters creating a transport format comprises a first group of static parameters predetermined by the control unit and a second group of variable parameters which can be influenced by the first entity.

3. Method according to Claim 2,
**characterized in that**
the length of a transmission interval within which the bit transmission layer can process data contiguously serves as a static or variable parameter.

4. Method according to Claim 2 or Claim 3,
**characterized in that**
the size or length of the data blocks (transport block) transmitted to the transport channels of the first entity (MAC) and the number of these data blocks serve as variable parameters.

5. Method according to one of Claims 1 to 4,
**characterized in that**
a 2nd entity in the data link layer generates data packets from the data stream at a service access point (radio bearer) for a bearer service at the request of the first entity (MAC) and transmits them to the assigned logical channels.

6. Method according to Claim 5,
**characterized in that**
the second entity (RLC) buffers the data stream fed in via the service access point.

7. Method according to Claim 5 or Claim 6,
**characterized in that**
the length and number of the data packets generated by the 2nd entity correspond to the length and number of the data blocks transmitted to the transport channels by the first entity (MAC).

## Revendications

1. Procédé de transmission de paquets de données par une interface air d'un système de téléphonie mobile, le procédé présentant les étapes suivantes :
a) une unité de contrôle et de commande (RRC) communique à une première unité (MAC) d'une couche liaison de données (L2), subordonnée à cette unité de contrôle et de commande, par l'intermédiaire de ses canaux logiques servant de point d'accès au service, sous forme d'un message de configuration,
1.) quels canaux logiques sont à représenter sur quels canaux de transport servant de point d'accès au service d'une couche physique (L1),
2.) la quantité (TFS) de formats de transport (TF), prédéterminée pour chacun des canaux de transport, ainsi que la quantité (TFCS) des combinaisons permises de formats de transport (TF) pour tous les canaux de transport, chaque format de transport (TF) présentant un jeu de paramètres déterminant les caractéristiques de transmission du canal de transport configuré avec le format de transport (TF) correspondant et
3.1.) quels formats de transport (TF) sont respectivement autorisés pour un canal logique ou
3.2.) quelle valeur d'au moins un des paramètres du jeu de paramètres des formats de transport (TF) est prédéterminée de manière fixe pour un canal logique, pour plusieurs canaux logiques ou pour tous les canaux logiques ;
b) la première unité (MAC) de la couche liaison de données sélectionne, en tenant compte de l'affectation définie dans le message de configuration, entre des formats de transport (TF) et des canaux logiques resp. en tenant compte de la valeur de paramètre respectivement prédéterminées pour les canaux logiques, un format de transport (TF) pour chacun des canaux de transport, de telle manière que la combinaison de formats de transport (TF) formée correspond à l'une des combinaisons de formats de transport définies comme admissibles et
c) la première unité (MAC) de la couche liaison de données (L2) transmet les paquets de données présents sur les canaux logiques aux canaux de transport d'une couche physique (L1), respectivement affectés aux canaux logiques au moyen du message de configuration, et celle-ci cause la transmission des paquets de données par l'intermédiaire de l'interface air.

2. Procédé selon la revendication 1,
**caractérisé en ce**
**que** le jeu de paramètres formant un format de transport est constitué d'un premier groupe de paramètres statiques, prédéterminé par l'unité de contrôle et de commande (RRC), et d'un deuxième groupe de paramètres variables, influençable par la première unité (MAC) de la couche liaison de données (L2).

3. Procédé selon la revendication 2,
**caractérisé en ce**
**que** la longueur d'un intervalle de transition, pendant lequel la couche physique (L1) peut traiter des données de manière continue, sert de paramètre statique ou variable.

4. Procédé selon la revendication 2,
**caractérisé en ce**
**que** la taille ou la longueur des blocs de données (bloc de transport) transmis aux canaux de transport par la première unité (MAC) de la couche liaison de données (L2), et le nombre de ces blocs de données servent de paramètres variables.

5. Procédé selon l'une quelconque des revendications 1 à 4,
**caractérisé en ce**
**qu'**une deuxième unité (RLC) de la couche liaison de données (L2) crée des paquets de données à partir du flux de données présent à un point d'accès au service (Radio Bearer) pour un service porteur et qu'elle les transmet à des canaux logiques affectés à la couche liaison de données (L2), après la demande par la première unité (MAC).

6. Procédé selon la revendication 5,
**caractérisé en ce**
**que** la deuxième unité (RLC) de la couche liaison de données (L2) mémorise temporairement le flux de données alimenté par l'intermédiaire du point d'accès au service (Radio Bearer).

7. Procédé selon la revendication 5 ou la revendication 6,
**caractérisé en ce**
**que** la longueur et le nombre des paquets de données créés par la deuxième unité (RLC) de la couche liaison de données (L2) correspondent à la longueur et au nombre des blocs de données transmis aux canaux de transport par la première unité (MAC) de la couche liaison de données (L2).
